# EUROPÄISCHE PATENTSCHRIFT

(11) **EP 1 159 928 B1**
(45) Veröffentlichungstag und Bekanntmachung des Hinweises auf die Patenterteilung: **02.01.2004**
(21) Anmeldenummer: 01113094.5
(22) Anmeldetag: 29.05.2001
(51) Int. Cl.: A61C 1/12, A61C 1/08, A61B 1/24

(54) **Medizinisches Handstück mit einem stabförmigen Griffteil**
Medical handpiece with a rod-like handle
Pièce à main médicale ayant un manche en forme de tige

(30) Priorität: 02.06.2000 DE 10027387; 26.03.2001 DE 10114656
(43) Veröffentlichungstag der Anmeldung: 05.12.2001
(73) Patentinhaber: Kaltenbach & Voigt GmbH & Co. KG, 88400 Biberach/Riss (DE)
(72) Erfinder: Lingenhöle, Bernhard, 88447 Warthausen (DE); Braun, Thomas, 88400 Biberach (DE)
(74) Vertreter: Schmidt-Evers, Jürgen, Dipl.-Ing.

(56) Entgegenhaltungen:
- EP-A- 0 054 653
- WO-A-96/41583
- DE-A- 19 848 556
- DE-A- 19 909 407
- US-A- 4 276 025
- US-A- 5 052 924
- US-A- 5 908 294

## Beschreibung

Die Erfindung bezieht sich auf ein dental medizinisches Handstück nach dem Oberbegriff des Anspruchs 1.

Ein solches Handstück dient zur Behandlung oder spanabhebenden Bearbeitung des menschlichen oder tierischen Körpers mit einem bewegbaren, insbesondere rotierbaren Werkzeug, und hat u. a. zwei Hauptforderungen zu erfüllen. Zum einen soll es eine ergonomisch günstige Bauform aufweisen, so daß die Bedienungsperson in der Lage ist, mit einem möglichst geringen Handhabungs- und Kraftaufwand das Handstück mit der Bedienungshand zu halten und zu dem sowie an dem Behandlungsort zu bewegen, um die Behandlung oder spanabhebende Bearbeitung auszuführen. Dabei sind in vielen Bearbeitungsfällen Präzisionsarbeiten auszuführen, die eine präzise Bewegung des Handstücks erfordern, z. B. bei der Ausarbeitung einer Kavität oder bei der Bearbeitung eines Zahnstumpfes an einem Zahn für eine Zahnkrone. Eine Bedingung hierfür ist, daß die Bedienungsperson das Handstück ergonomisch günstig ergreifen kann. Zum anderen soll das Handstück von einer solchen Bauform sein, daß es auch dann handhabungsfreundlich benutzt werden kann, wenn der Bearbeitungsort sich in einer Körperhöhle befindet, wie es z. B. bei einem Mundraum der Fall ist. Hierbei ist anzustreben, daß das Handstück auch bei beengten Raum- und Sichtverhältnissen vorteilhaft benutzbar sein soll.

Zur Erfüllung der ersten Forderung ist ein sogenanntes Winkel-Handstück entwickelt worden, das einen spitzwinklig abgewinkelten Halsschenkel aufweist, der an seinem freien Ende kopfförmig verdickt ist und eine Haltevorrichtung mit einer seitlichen Einstecköffnung für ein Werkzeug aufweist. Aufgrund der seitlich spitzwinkligen Abwinklung weist das Griffteil einen Knick auf, wobei die Einstecköffnung sowie das darin eingesteckte Werkzeug sich auf der Seite des Griffteils befinden, der der Knick zugewandt ist. Ein solches Winkelwerkzeug kann manuell ergonomisch günstig ergriffen und bei der Bearbeitung geführt werden, wobei z. B. mit einem Finger der Bedienungshand Druck auf das Handstück in dessen konkavem Knickbereich ausgeübt wird. Hierdurch befindet sich das Handstück bei der Bearbeitung in einem stabilen Zustand, der eine Bewegung des Handstücks unter dem Andruck handhabungsfreundlich ermöglicht. Diese bekannte Winkelform des Handstücks hat sich auch bei beengten Raumverhältnissen am Bearbeitungsort, insbesondere im Bereich einer Mundhöhle, als vorteilhaft erwiesen. Das Winkelhandstück wird dabei in an sich bekannter und üblicher Griffstellung der Bedienungshand durch die Körperhöhlenöffnung in die Körperhöhle eingeführt, wobei auch hier sich die bezüglich den Andruckkräften am Werkzeug stabile Position des Winkelhandstücks vorteilhaft selbsttätig einstellt.

Ein zahnmedizinisches Handstück der eingangs angegebenen Art in Form eines Winkelhandstücks ist in der WO 96/41583 beschrieben. Bei diesem vorbekannten Winkelhandstück schließt die Mittelachse der in einem Kopf des abgewinkelten Halteschenkels integrierten Haltevorrichtung einen stumpfen Winkel von 103 bis 107 ° mit der Mittelachse des abgewinkelten Halteschenkels ein. Diese Bauform soll bezüglich den anatomischen Verhältnissen eines menschlichen Kiefers besonders angepaßt sein, so daß es möglich sein soll, in dem zwischen dem Ober- und Unterkiefer vorhandenen beengten Raum die Zähne auch im hinteren Bereich (Molaren) in günstiger Position zu bearbeiten.

Es ist außerdem ein Turbinen-Handstück in Form eines Winkelhandstücks bekannt geworden, bei dem die Mittelachse der Haltevorrichtung mit dem sich vom Kreuzungspunkt dieser Mittelachse nach hinten erstreckenden Abschnitt der Mittelachse des abgewinkelten Halsschenkels einen stumpfen Winkel von 95 ° einschließt.

Aus der US 4 276 025 A ist ein Motor-Handstück zu entnehmen, dessen Griffteil zu der die Einstecköffnung für ein Werkzeug abgewandten Seite hin gekrümmt ist. Der Winkel, den die Mittelachse der Einstecköffnung und die Mittelachse des vorderen Handstückbereichs einschließen, ist nicht angegeben. Die zeichnerische Darstellung lässt erkennen, dass dieser Winkel etwa 90° beträgt.

DE 198 45 556 A (KaVo) offenbart ein sich winkelförmig (Fig. 1) oder gerade (Fig. 2) erstreckendendes Handstück, wobei die Mittelachse einer Einstecköffnung für ein Werkzeug mit der Mittelachse des sich gerade erstreckenden Griffteils einen stumpfen Winkel von etwa 90° bis etwa 100° oder von etwa 90° oder 100° einschließt (siehe Spalte 5, Z. 20-23).

Aus US 5 052 924 A ist ein dentalmedizinisches Handstück mit einem stabförmigen Griffteil zu entnehmen, von dessen vorderen Ende seitlich ein Werkzeug absteht, wobei ein vorderer Griffabschnitt des Griffteils zu dem Werkzeug abgewandten Seite hin bogenförmig gekrümmt ist.

Der Erfindung liegt die Aufgabe zugrunde, ein medizinisches oder dentalmedizinisches Handstück der eingangs angegebenen Art so auszugestalten, daß seine Eignung, auch in kleinen Räumen eingesetzt zu werden, verbessert wird. Es soll insbesondere seine Formgebung unter Berücksichtigung der anatomischen Form des menschlichen Kiefers bzw. der menschlichen geöffneten Mundhöhle verbessert werden.

Diese Aufgabe wird durch die Merkmale des Anspruchs 1 gelöst. Vorteilhafte Weiterbildungen der Erfindung sind in den Unteransprüchen beschrieben.

Bei der erfindungsgemäßen Ausgestaltung ist ein vorderer Griffabschnitt des Griffteils zu der der Einstecköffnung abgewandten Seite des Handstücks hin gekrümmt, und es schließt die Mittelachse der Einstecköffnung der Haltevorrichtung mit der Mittelachse des Griffteils des Handstücks einen Winkel ein, der kleiner als 103° und größer als 95° ist, vorzugsweise etwa 100° beträgt. Es hat sich bei Versuchen gezeigt, daß gerade dieser Winkelbereich unter Berücksichtigung einer gedachten Linie oder Raumkurve, in der die Zahnspitzen eines durchschnittlichen Unterkiefers des menschlichen Kiefers liegen, besonders angepaßt und somit günstig ist. Hierdurch ist es möglich, nicht nur die Zähne im vorderen Bereich des Unterkiefers sondern auch im hinteren Bereich raumgünstig zu erreichen, so daß die Bearbeitungsflächen an dem jeweiligen Zahn in spezifischer Position des Handstücks bearbeitet werden können, ohne daß das Handstück mit den Grenzen der Mundhöhle bzw. mit den Zähnen des Unter- oder Oberkiefers in Kollision gerät und ohne daß der Unterkiefer extrem gespreizt werden muß. Hierdurch ist eine bedeutende Verbesserung geschaffen, die die Bearbeitung wesentlich erleichtert, weil der Patient auch bei einer kleineren Mundöffnung bei ergonomisch günstiger Handhabung durch die Bedienungsperson behandelt werden kann. Dabei kann die Bedienungsperson ihre Aufmerksamkeit vermehrt auf die Qualität der Bearbeitung bzw. Behandlung richten. Die erfindungsgemäße Ausgestaltung führt somit zu einer Verbesserung sowohl für den Patienten als auch für die Bedienungsperson bzw. den Zahnarzt.

Die Krümmung ist an die anatomische Krümmungsform oder -kurve einer die Zahnspitzen eines durchschnittlichen Unterkiefers des menschlichen Körpers enthaltenden Kurve bzw. Linie angepaßt. Die Krümmung kann gleichmäßig oder mit zunehmendem Abstand von der Haltevorrichtung für das Werkzeug progressiv sein.

Eine andere Maßnahme, die Raumsituation unter Berücksichtigung der beengten Raumverhältnisse weiter zu verbessern, besteht darin, das Handstück bzw. dessen Kopf so auszubilden, daß die dem Werkzeug zugewandte Seitenfläche des Kopfes auf einer Verlängerung der Krümmungslinie liegt.

Beide vorgenannten Maßnahmen tragen dazu bei, das Handstück an die anatomische Form des Unterkiefers anzupassen. Im ersten Fall folgt zumindest die äußere Seite des gekrümmten Griffabschnitts der Kurvenform einer die Zahnspitzen des Unterkiefers enthaltenden Linie. Hierdurch steht dem Handstück ein maximal ausnutzbarer Bewegungsraum bei der Bearbeitung zur Verfügung, der in Richtung auf den Unterkiefer durch dessen Zähne begrenzt ist. Bei dieser erfindungsgemäßen Ausgestaltung kann das Handstück den zur Verfügung stehenden Bewegungsraum maximal ausnutzen. Diese Vorteile lassen sich nicht nur bei der Bearbeitung seitlicher Innen- oder Außenflächen oder seitlicher Kavitäten am Zahn erreichen, sondern auch bei der Ausarbeitung okklusaler Kavitäten. Aufgrund der raumgünstigen Formgebung lassen sich auch verhältnismäßig lange Werkzeuge bzw. Bearbeitungsabschnitte benutzen.

Es gibt auch medizinische Handstücke, die nicht einer spanabhebenden Bearbeitung des menschlichen oder tierischen Körpers, sondern einer anderweitigen Behandlung dienen, z. B. einer Bildaufnahme der Behandlungsstelle durch einen im vorderen Endbereich des Handstücks seitlich angeordneten Lichteinlaß, von dem sich ein Bild- bzw. Lichtleiter nach hinten erstreckt.

Bei einem solchen Handstück braucht die Bedienungsperson keine Zerspanungs-Präzisionsarbeit mit dem Handstück auszuführen und nur eine Haltekraft auf das Handstück auszuüben. Ein solches Handstück wird in der Fachsprache mit "Funktionshandstück" bezeichnet.

Das Handstück ist in seinem vorderen Bereich zur der Einlaßöffnung abgewandten Seite hin gekrümmt. Hierdurch läßt sich das Handstück an den meisten Behandlungsstellen, die sich bei der Behandlung des menschlichen oder tierischen Körpers ergeben, ergonomisch günstig handhaben, wobei die das Handstück ergreifende Bedienungshand handhabungsfreundlich bewegt werden kann. Dies wird durch die gekrümmte Form des Handstücks ermöglicht, bei der sich der Griffbereich bzw. der hintere Bereich des Handstücks von der Umgebung der Behandlungsstelle abhebt und somit ein größerer Freiraum zumindest für den hinteren Bereich des Handstücks und für die Bedienungshand zur Verfügung steht.

Die Ausgestaltung eignet sich insbesondere für ein dentalmedizinisches Handstück, das dazu eingerichtet ist, Bild- bzw. Videoaufnahmen von den Zähnen im Mundraum des Patienten zu machen. Ein solches erfindungsgemäßes Handstück ist nicht nur im Hinblick auf die anatomische Krümmungsform oder -kurve einer die Zahnspitzen eines durchschnittlichen Unterkiefers enthaltenen Kurve bzw. Linie günstig, sondern es eignet sich auch für die Zähne des Oberkiefers und für alle denkbaren Behandlungsstellen im Mundraum, weil die spezielle erfindungsgemäße Form bezüglich der Position der Zähne und der Mundöffnung günstig ist und deshalb das Handstück sich mit seinem Lichteinlaß im Mundraum günstig positionieren läßt.

In den Unteransprüchen sind Merkmale enthalten, die die Raumform weiter verbessern und zur Handhabungsfreundlichkeit beitragen.

Weitere Weiterbildungsmerkmale ermöglichen es, die Behandlungsstelle zu beleuchten, den Fokus des Handstücks zu verstellen, die Bauweise des Handstücks zu vereinfachen sowie die Griffsicherheit des Handstücks und auch das Aussehen des Handstücks zu verbessern.

Nachfolgend werden die Erfindung und weitere durch sie erzielbare Vorteile anhand von vorteilhaften Ausgestaltungen eines bevorzugten Beispiels näher erläutert. Es zeigt:
Fig. 1 ein erfindungsgemäßes dentalmedizinisches Behandlungsinstrument mit einem Handstück in der Seitenansicht;
Fig. 2 das Handstück in einer Arbeitsstellung im Mundraum eines menschlichen Kiefers in der Seitenansicht, wobei ein vorbekanntes Handstück einer früheren Entwicklung der Anmelderin zum Vergleich gestrichelt angedeutet ist;
Fig. 3 das Handstück nach Fig. 2 in einer anderen Arbeitsstellung;
Fig. 4 das Handstück nach Fig. 2 in einer noch anderen Arbeitsstellung,
Fig. 5 ein medizinisches oder dentalmedizinisches Handstück, das kein Teil der Erfindung ist, in abgewandelter Ausgestaltung in der Seitenansicht;
Fig. 6 einen erfindungsgemäßen dentalen Behandlungsstuhl in der Rückansicht;
Fig. 7 eine Einzelheit einer Ablagevorrichtung für den Behandlungsstuhl.

Die Hauptteile des allgemein mit 1 bezeichneten Behandlungsinstruments sind ein das hintere Ende des Behandlungsinstruments 1 bildendes Anschlußteil 2, das Handstück 3, das durch eine Schnellkupplung 4 in Form einer Steckkupplung, insbesondere einer Steck/Drehkupplung, mit dem Anschlußteil 2 lösbar verbunden ist und im gekuppelten Zustand sich in Form eines stabförmigen Griffteils vom Anschlußteil 2 nach vorne erstreckt, eine im vorderen Endbereich des Handstücks 3 angeordnete Haltevorrichtung 5 für ein Behandlungs- oder Bearbeitungswerkzeug 6, und ein Antriebsmotor 7, der im Bereich des Anschlußteils 2 oder im Bereich des Handstücks 3 angeordnet sein kann und beim vorliegenden Ausführungsbeispiel durch eine im vorderen Endbereich des Handstücks 3 integrierte Turbine 8 gebildet ist, wie es bei sogenannten Turbinenhandstücken an sich bekannt ist.

Wenn der Antriebsmotor 7 sich im Anschlußteil 2 befindet (nicht dargestellt), ist im Handstück 3 eine Antriebswelle drehbar gelagert, die im mit dem Anschlußteil 2 gekuppelten Zustand des Handstücks 3 durch eine Steckkupplung mit dem Antriebsmotor in Antriebsverbindung steht, die durch ein Entfernen des Handstücks 3 vom Anschlußteil 2 selbsttätig gelöst wird. Das vordere Ende der Antriebswelle ist mit einer Antriebshülse der Haltevorrichtung 5 antriebsmäßig verbunden, in die das Bearbeitungswerkzeug 6 drehfest und axial positioniert einsteckbar ist.

Beim vorliegenden Ausführungsbeispiel, bei dem eine Turbine 8 vorgesehen ist, erstreckt sich längs durch das Behandlungsinstrument 1 eine Druckluftleitung 9 zur Turbine 8 und gegebenenfalls auch eine Abführleitung für verbrauchte Druckluft, was weiter unten noch beschrieben wird. Die Haltevorrichtung 5 ist durch die Aufnahmehülse 11 gebildet, auf der das Turbinenrad der Turbine 8 sitzt und die drehbar im vorzugsweise verdickten Handstückkopf 12 des Handstücks 2 gelagert ist. Die Aufnahmehülse 11 ist an ihrem einen Ende offen, wodurch eine Einstecköffnung 13 für einen Schaft 6a des Bearbeitungswerkzeugs 6 gebildet ist, dessen abrasiver oder mit Schneidkanten versehener Bearbeitungsabschnitt mit 6b bezeichnet ist. Der den Handstückkopf 12 aufweisende vordere Griffteilabschnitt ist zu einer Seite 14 des Handstücks 3 hin abgewinkelt angeordnet, wobei der spitze Winkel W im Winkelbereich zwischen 10 ° und 28 ° liegt, vorzugsweise etwa 19 ° beträgt. Das Bearbeitungswerkzeug 6 ist von der gegenüberliegenden Seite 15 des Handstücks 3 her in die Aufnahmehülse 11 einsteckbar, wobei es beim Einstecken selbsttätig drehfest mit der Aufnahmehülse 11 verbunden und darin axial gegen eine unbeabsichtigte Entnahme positioniert wird. Zum Lösen des Bearbeitungswerkzeugs 6 kann auf der der Einstecköffnung 13 gegenüberliegenden Seite 14 des Handstückkopfes 12 ein Betätigungselement 16 angeordnet sein, bei dessen manueller Verschiebung gegen den Handstückkopf 12 die axiale Positionierung in der Aufnahmehülse 11 gelöst wird, so daß das Werkzeug 6 axial zur Seite 15 hin herausgezogen werden kann.

Durch die Schnellkupplung 4 wird die Handhabbarkeit des Handstücks 3 wesentlich verbessert, weil das Anschlußteil 2 an Drehbewegungen des Handstücks 3 während der Behandlung bzw. Bearbeitung nicht teilzunehmen braucht und deshalb ein Drehausgleich stattfinden kann. Die Steck/Drehkupplung weist einen hohlzylindrischen Kupplungszapfen 4a am einen Kupplungsteil und eine den Kupplungszapfen 4a mit geringem Bewegungsspiel aufnehmende Kupplungsausnehmung 4b auf. Bei der vorliegenden Ausgestaltung erstreckt sich der Kupplungszapfen 4a vom Anschlußteil 2 nach vorne und die Kupplungsausnehmung 4b ist im hinteren Endbereich des Handstücks 3 angeordnet. Zur lösbaren Positionierung der Steckkupplung in der Kupplungsstellung dient eine manuell überdrückbare Verrastungsvorrichtung 18 mit einem quer bewegbar gelagerten Verrastungselement 18a, das in einer Ausnehmung in der Außenmantelfläche des Steckzapfens 4a oder in der Innenmantelfläche der Steckausnehmung 4b angeordnet ist und durch eine elastische Fedekraft in eine im jeweils gegenüberliegend anderen Teil angeordnete Verrastungsausnehmung so hineingedrückt wird, daß das Verrastungselement 18a ausfedern kann und die Verrastungsvorrichtung 18 durch eine axial gerichtete und manuell leicht aufbringbare Zugkraft überdrückbar ist.

Das Anschlußteil 2 ist durch eine mit ihm verbundene, andeutungsweise dargestellte flexible Versorgungsleitung 19, insbesondere durch einen flexiblen Versorgungsschlauch, mit einem nicht dargestellten Steuergerät verbunden, wie es bei einem medizinischen oder dentalmedizinischen Behandlungsplatz an sich bekannt ist. Durch die Versorgungsleitung 19 und durch das Behandlungsinstrument 1 erstreckt sich die Druckluftleitung 9 und kann sich wenigstens eine weitere Mediumleitung, z. B. für Licht, Luft, Wasser und/oder Spray, erstrecken, die sich so durch die Steck/Drehkupplung 4 erstrecken, daß der Durchgang in der oder den Mediumleitungen in jeder Drehstellung gewährleistet ist. Die wenigstens eine Mediumleitung 9, kann die Teilungsfuge 21 zwischen dem Steckzapfen 4a und der Steckausnehmung 4b Z-förmig in einer Ringnut durchsetzen, wobei der die Teilungsfuge 21 radial durchsetzende Abschnitt der Mediumleitung 9, durch zu beiden Seiten der Ringnut 22 angeordnete Dichtringe 23 abgedichtet ist, die in einer Außenringnut des Steckzapfens 4a oder in einer Innenringnut der Steckausnehmung 4b angeordnet sind.

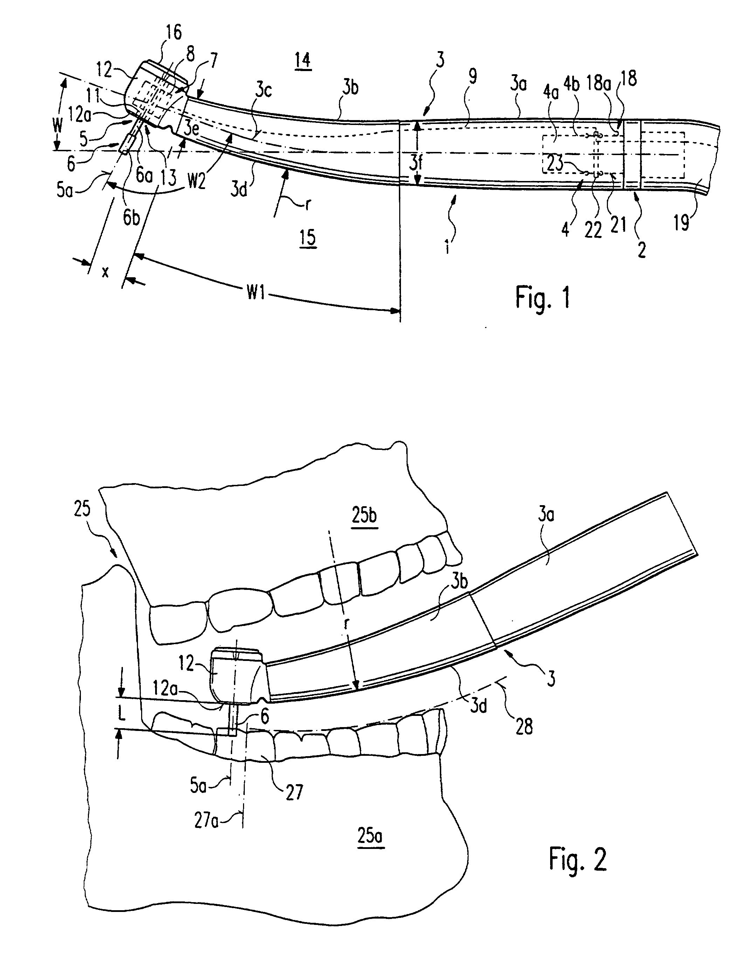

Das stabförmige Griffteil des Handstücks 3 besteht aus einem hinteren Griffabschnitt 3a, der sich vorzugsweise gerade erstreckt und einem sich daran anschließenden vorderen Griffabschnitt 3b, der zur dem Bearbeitungswerkzeug 6 abgewandten Seite 14 hin gekrümmt verläuft. Die Krümmung kann gleichmäßig, insbesondere kreisbogenabschnittförmig, oder in der Richtung nach vorne degressiv ausgebildet sein, d. h. der Griffabschnitt 3b kann in seinem hinteren Bereich stärker gekrümmt sein als in seinem vorderen Bereich. Der Winkelbereich W1, in dem die Krümmung verläuft, beträgt etwa 10 ° bis 28 °, insbesondere etwa 19 °. Der äußere Krümmungsradius r weist etwa 145 mm bis 175 mm, insbesondere etwa 160 mm auf. Die Länge des gekrümmten Griffabschnitts 3b kann etwa die Hälfte der Gesamtlänge des stabförmigen Griffteils betragen. Die Mittelachse 5a der Haltevorrichtung 5 schließt mit dem sich vom Kreuzungspunkt nach hinten erstreckenden Abschnitt der gekrümmten Mittelachse 3c bzw. einer die gekrümmte Mittelachse 3c im Kreuzungspunkt berührenden Tangente des vorderen Griffabschnitts 3b einen Winkel W2 ein, der größer als 95 ° und kleiner als 103 ° ist. Vorzugsweise beträgt der Winkel W2 etwa 98 ° bis 102 °, insbesondere etwa 100 °. Der Kreuzungspunkt zwischen den Mittelachsen 5a und 3c kann am vorderen Ende des Winkelbereichs W1 liegen oder einen axialen Abstand x von dem Winkelbereich W 1 aufweisen, wie es insbesondere Fig. 1 zeigt. In diesem Falle erstreckt sich der Winkel W2 zwischen der Mittelachse 5a und einer Tangente, die die gekrümmte Mittelachse 3c am Ende der Krümmung berührt. Diese Unterschiede komplizieren den Sachverhalt und sind außerdem gering, so daß mit einem Winkel W2 zwischen den Mittelachsen 3c, 5a argumentiert werden kann.

Der Handstückkopf 12 ist so am vorderen Ende des Griffabschnitts 3b angeordnet, daß seine der Seite 15 zugewandte Seitenfläche 12a mit einer Verlängerung der gekrümmten äußeren Mantelflächenlinie 3d des Griffabschnitts 3b abschließt bzw. auf dieser Verlängerung im wesentlichen liegt. Der Griffabschnitt 3b verjüngt sich kontinuierlich und dabei gleichmäßig oder ungleichmäßig, z. B. nach vorne degressiv, so daß seine Querschnittsabmessung 3e im vorderen Endbereich des Griffabschnitts 3b - in der Seitenansicht gesehen - etwa 9 mm beträgt. Im hinteren Bereich des Griffabschnitts 3b kann die entsprechende Querschnittsabmessung 3f im wesentlichen 15,2 mm betragen. Bei einer vorzugsweise kreisrunden Querschnittsform des Griffabschnitts 3b handelt es sich bei den vorgenannten Abmessungen 3e, 3f jeweils um den zugehörigen Außendurchmesser des Griffabschnitts 3b.

Im vorderen Endbereich des Griffabschnitts 3b ist dieser zur Vergrößerung seiner Griffestigkeit an seiner Mantelfläche rauh ausgebildet. Hierzu kann eine nicht dargestellte Mikrostruktur 24 dienen, deren Rauhtiefe etwa 3 µm bis 15 µm, vorzugsweise etwa 6 µm beträgt. Diese rauhe Oberfläche kann direkt in die Oberfläche des vorzugsweise aus Metall, z. B. korrosionsfestem Stahl, insbesondere Neusilber, bestehenden stabförmigen Griffteils eingearbeitet sein oder sie kann auch in die Oberfläche einer Beschichtung des Griffabschnitts 3b eingearbeitet sein. Der Handstückkopf 12 ist vorzugsweise einteilig an den Griffabschnitt 3b angeformt. Die Griffabschnitte 3a, 3b können einteilig oder zweiteilig ausgebildet sein, und sie sind im letzteren Fall fest miteinander verbunden, z. B. miteinander verschraubt.

Das Handstück 3 ist an die anatomische Form eines durchschnittlichen menschlichen Kiefers 25 angepaßt, wie er in den Fig. 2 bis 4 dargestellt ist.

Die Fig. 2 bis 4 zeigen den Kiefer 25 in einer Behandlungsstellung, in der der Unterkiefer 25a und der Oberkiefer 25b gespreizt sind und somit der Mundraum 26 geöffnet ist, wobei das Handstück 3 sich gemäß Fig. 2 in einer Stellung befindet, in der sein Bearbeitungswerkzeug 6 eine okklusale Kavität (nicht dargestellt) auszuarbeiten vermag, wobei die Werkzeugspitze den zu bearbeitenden Zahn berührt bzw. geringfügig in diesen eingedrungen ist, und wobei die Mittelachse 5a des Bearbeitungswerkzeugs 6 sich etwa parallel zur Mittelachse 27a des zu bearbeitenden Zahns 27 erstreckt. Die Fig. 2 läßt erkennen, daß die Form des Handstücks 3, insbesondere die Ausgestaltung des Griffabschnitts 3b und des Handstückkopfes 12 an eine die Zahnspitzen enthaltende konkave Unterkieferzahnkurve 28 bzw. Zahnkurvenfläche in etwa angepaßt ist. Hierdurch weist das Handstück 3 sowohl in seiner in Fig. 2 dargestellten Anfangsstellung seiner Bearbeitung als auch in seiner nicht dargestellten Endstellung seiner Bearbeitung einen hinreichenden Abstand sowohl von der Unterkieferzahnkurve 28a als auch von den Zahnspitzen des Oberkiefers 25b auf. Dabei ist der Abstand zur Oberkieferzahnkurve 28c gering und so groß, daß das Handstück am zu bearbeitenden Zahn 27 ohne Beeinträchtigung positioniert werden kann. Zur Bearbeitung wird das Handstück 3 in den Zahn 27 eingesenkt. Dies ist aufgrund des ausreichend großen und parallelen Abstands zur Unterkieferzahnkurve 28a möglich, da dieser Abstand größer bemessen ist, als die Tiefe der einzuarbeitenden Kavität. Entsprechend lang ist die von der Seitenfläche 12a abstehende Länge L des Bearbeitungswerkzeugs 6 zu bemessen. Die Länge L beträgt z. B. etwa 6 mm bis 12 mm, vorzugsweise etwa 8 mm. Hierdurch wird deutlich, daß bei der erfindungsgemäßen Ausgestaltung der vorhandene Freiraum zwischen den Zähnen des Kiefers 25 vorteilhaft ausgenutzt werden kann und eine handhabungsfreundliche Bearbeitung der Zähne möglich ist. Dies gilt insbesondere für die Zähne im hinteren Bereich des Mundraums, nämlich im Bereich der Molaren, und auch für den hintersten Zahn. Bei der erfindungsgemäßen Ausgestaltung besteht zwischen der Außenseite 3d des Griffteilabschnitts 3b und der Unterkieferzahnkurve 28 ein im wesentlichen gleich großer Abstand, der eine diesem Abstand im Bereich des Handstückkopfes 12 entsprechende Einarbeitungstiefe im Zahn (Tiefe der Kavität) ermöglicht und dabei diesen Freiraum optimal ausnutzt. Diese gilt entsprechend auch für Arbeitsstellungen des Handstücks 3, in denen zwecks Ausarbeitung von Hinterschneidungen der Kavität oder konischen Außenflächen z. B. für eine Krone die Mittelachse 5a bezüglich der Mittelachse 27a des zu bearbeitenden Zahns 27 geringfügig gekippt wird. Wie Fig. 2 außerdem zeigt, führt die erfindungsgemäße Ausgestaltung auch zu einer guten Ausnutzung des Freiraums zwischen dem Handstück 3 und dem Oberkiefer 25b.

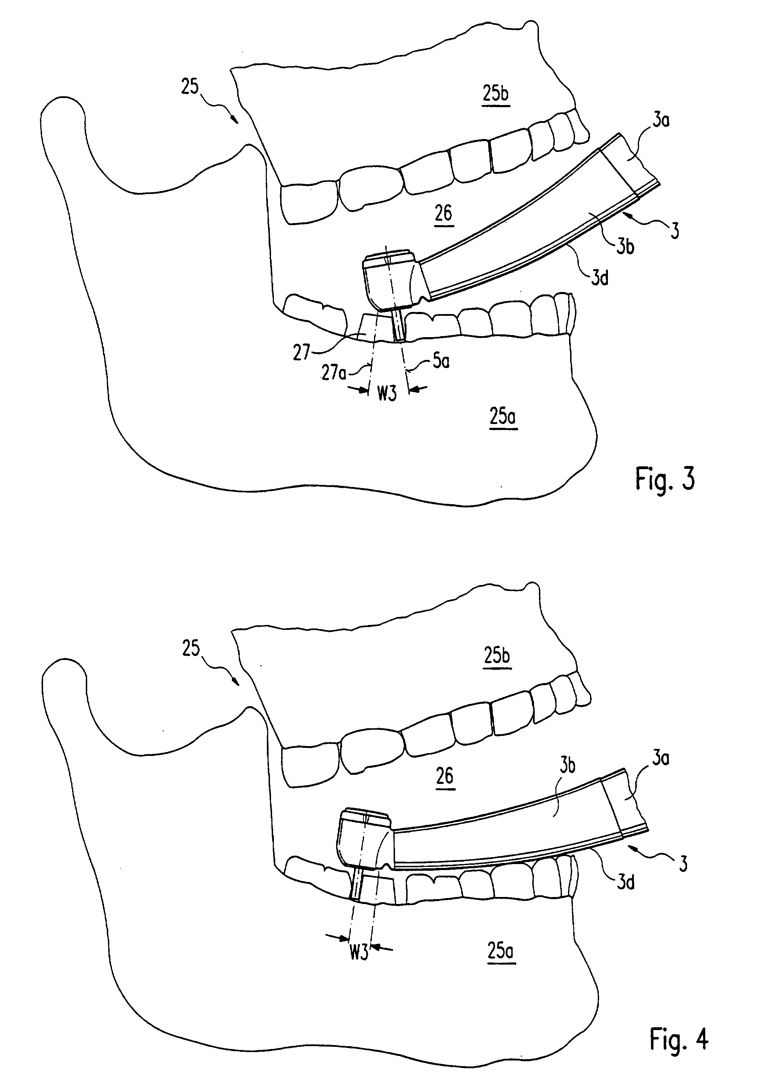

Beim Ausführungsbeispiel nach Fig. 3 und 4 wird das erfindungsgemäße Handstück 3 zur Präparation der Umfangsfläche eines Zahns für eine Zahnkrone eingesetzt. Auch bei diesem Beispiel, bei dem die Mittelachse 5a bezüglich der Mittelachse 27a des zu bearbeitenden Zahns 27 wegen der erforderlichen Konizität der Umfangsfläche des Zahns um einen Winkel W3 von etwa 5 ° geringfügig gekippt ist, läßt sich aufgrund der erfindungsgemäßen Ausgestaltung der Freiraum zwischen dem Handstück 3 und den Unterkieferzähnen und auch den Oberkieferzähnen vorteilhaft ausnutzen.

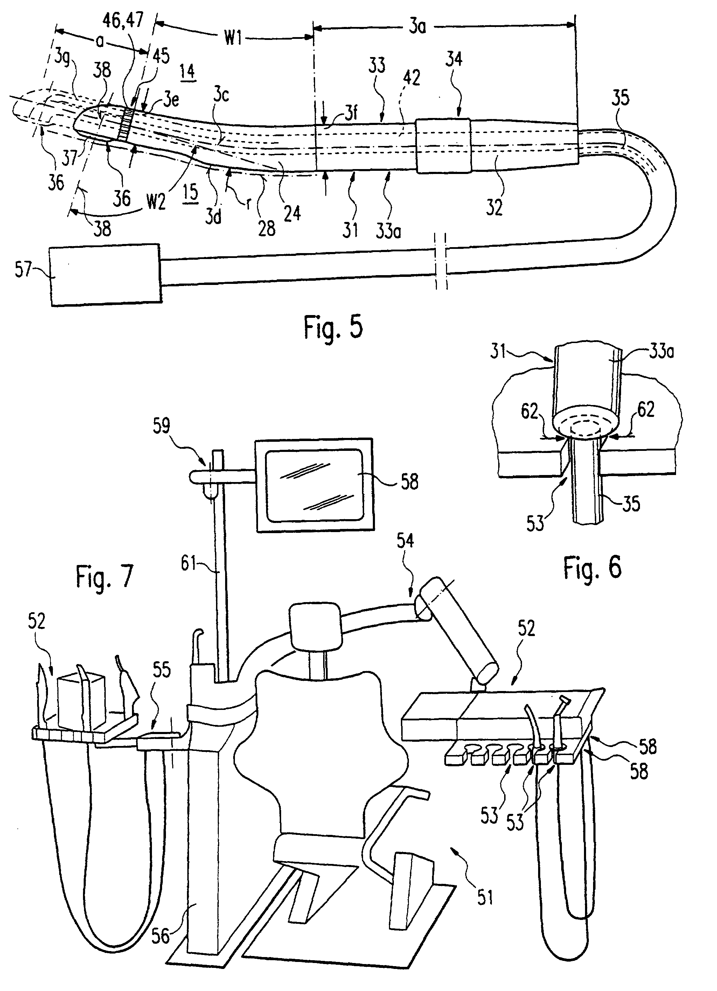

Das Ausführungsbeispiel nach Fig. 5 zeigt ein medizinisches, insbesondere dentalmedizinisches Behandlungsinstrument 31, das ebenfalls aus einem das hintere Ende des Behandlungsinstruments 31 bildenden Anschlußteil 32 und einem den übrigen bzw. vorderen Längsabschnitt des Behandlungsinstruments 31 bildenden Handstück 33 bestehen kann, wobei das Anschlußteil 32 und das Handstück 33 durch eine Schnellkupplung 34 in Form einer Steckkupplung lösbar miteinander verbunden sind, die durch einen Kupplungszapfen am einen Kupplungsteil und eine den Kupplungszapfen mit geringem Bewegungsspiel aufnehmende Kupplungsausnehmung am anderen Verbindungsteil gebildet sein kann. Bei diesem Ausführungsbeispiel sind das Anschlußteil 32 und das Handstück 33 derart fest aneinander montiert, daß sie sich zwar in einer Werkstatt mit zugehörigen Hilfsmitteln lösen lassen, jedoch nicht im Bereich einer medizinischen Praxis oder eines Operationsraumes. Dies gilt vorzugsweise auch für die Befestigung einer flexiblen Versorgungsleitung 35, die entsprechend mit dem hinteren Ende des Anschlußteils 32 verbunden ist. Da das Behandlungsinstrument 31 somit keine feste Handhabungseinheit bildet, wird es im Folgenden mit Handstück 33a bezeichnet.

Das stabförmige Handstück 33a weist an seinem vorderen Ende einen seitlichen Lichteinlaß 36 auf, bestehend aus einer seitlichen Lichteinlaßöffnung, die durch eine Schutzscheibe 37 aus lichtdurchlässigem Material, z. B. Glas oder Kunststoff, abgedichtet ist, so daß Verschmutzungen nicht in den Lichteinlaß 36 eintreten können. Vom Lichteinlaß 36 erstreckt sich ein Lichtleiter 38 längs durch das Handstück nach hinten, der sich durch die Versorgungsleitung 35 weiter nach hinten erstreckt. Die sich quer zur Längsmittelachse 38 erstreckende Mittelachse 39 des Lichteinlasses 36 kann im Kreuzungspunkt mit der Längsmittelachse 38 einen Winkel einschließen, der etwa 90 ° beträgt.

Dem Handstück 33a ist im Bereich des Lichteinlasses 36 eine in ihrer Gesamtheit mit 41 angedeutete Beleuchtungsvorrichtung zugeordnet, mit einer Lichtquelle oder einem Lichtauslaß, der sich vorzugsweise hinter der Schutzscheibe 37 befindet, so daß auch die Lichtquelle oder der Lichtaustritt vor Verschmutzung geschützt sind. Die Beleuchtungseinrichtung 41 kann einen Lichtleiter 42 zur Zuführung von Licht aufweisen, der sich von hinten nach vorne erstreckt und im Bereich des Lichteintritts 36, vorzugsweise hinter der Schutzscheibe 37 mündet, so daß das durch ihn zugeführte Licht durch die Schutzscheibe 37 strahlen und die Behandlungsstelle beleuchten kann.

Das längliche oder stabförmige Handstücks 3 weist ein Griffteil mit einem hinteren Griffabschnitt 3a auf, der sich vorzugsweise gerade erstreckt und sich in einen daran anschließenden vorderen Griffabschnitt 3b fortsetzt, der zur dem Lichteinlaß 36 abgewandten Seite 14 hin gekrümmt verläuft. Die Krümmung kann gleichmäßig, insbesondere kreisbogenabschnittförmig, oder in der Richtung nach vorne degressiv ausgebildet sein, d. h. der Griffabschnitt 3b kann in seinem hinteren Bereich stärker gekrümmt sein als in seinem vorderen Bereich. Der Winkelbereich W1, in dem die Krümmung verläuft, kann etwa 10 ° bis 28 °, insbesondere etwa 19 °, betragen. Der äußere Krümmungsradius r kann etwa 145 mm bis 175 mm, insbesondere etwa 160 mm, aufweisen. Die Länge des gekrümmten Griffabschnitts 3b kann etwa die Hälfte der Gesamtlänge des Handstücks 33a betragen. Die Mittelachse 39 des Lichteinlasses 36 schließt mit dem sich vom Kreuzungspunkt nach hinten erstreckenden Abschnitt der gekrümmten Mittelachse 3c bzw. einer die gekrümmte Mittelachse 3c im Kreuzungspunkt berührenden Tangente des vorderen Griffabschnitts 3b einen Winkel W2 ein, der etwa 90° bis 110° beträgt. Vorzugsweise beträgt der Winkel W2 etwa 98 ° bis 102 °, insbesondere etwa 100 °. Der Kreuzungspunkt zwischen den Mittelachsen 38 und 39 kann am vorderen Ende des Winkelbereichs W1 liegen oder einen axialen Abstand x von dem Winkelbereich W 1 aufweisen, wie es Fig. 5 zeigt. In diesem Falle erstreckt sich der Winkel W2 zwischen der Mittelachse 39 und einer Tangente, die die gekrümmte Mittelachse 38 am Ende der Krümmung berührt.

Der Lichteinlaß 36 bzw. die Außenfläche der Schutzscheibe 37 können mit der der Seite 15 zugewandten Außenseitenfläche bzw. deren äußeren Mantelflächenlinie 3b abschließen oder von dieser geringfügig abstehen, z.B. um ein paar Millimeter.

Der Griffabschnitt 3b verjüngt sich kontinuierlich und dabei gleichmäßig oder ungleichmäßig, z. B. nach vorne degressiv, so daß seine Querschnittsabmessung 33e im vorderen Endbereich des Griffabschnitts 3b - in der Seitenansicht gesehen - etwa 9 mm beträgt. Im hinteren Bereich des Griffabschnitts 3b kann die entsprechende Querschnittsabmessung 3f im wesentlichen 15,2 mm betragen. Bei einer vorzugsweise kreisrunden Querschnittsform des Griffabschnitts 3b handelt es sich bei den vorgenannten Abmessungen 3e, 3f jeweils um den zugehörigen Außendurchmesser des Griffabschnitts 3b.

Beim Ausführungsbeispiel erstreckt sich das Handstück 33a nach vorne über den gekrümmten Griffabschnitt 3b hinaus, vorzugsweise gerade. Dieser Griffabschnitt ist mit 3g bezeichnet und vorzugsweise kürzer bemessen als der gekrümmte Griffabschnitt 3b. Bei einer solchen Ausgestaltung ist der Lichteinlaß 36 in einem nach vorne gerichteten Abstand a vom gekrümmten Griffabschnitt 3b angeordnet.

Das Handstück 33a ist wenigstens in seinem mittleren Längsbereich, hier im gekrümmten Griffbereich 3b zur Vergrößerung seiner Griffestigkeit an seiner Mantelfläche rauh ausgebildet. Hierzu kann eine nicht dargestellte Mikrostruktur 24 dienen, deren Rauhtiefe etwa 3 µm bis 15 µm, vorzugsweise etwa 6 µm beträgt. Diese rauhe Oberfläche kann direkt in die Oberfläche des vorzugsweise aus Metall, z. B. korrosionsfestem Stahl, insbesondere Neusilber, bestehenden stabförmigen Griffteils eingearbeitet sein oder sie kann auch in die Oberfläche einer Beschichtung des Griffabschnitts 3b eingearbeitet sein. Der Handstückkopf 12 ist vorzugsweise einteilig an den Griffabschnitt 3b angeformt. Die Griffabschnitte 3a, 3b können einteilig oder zweiteilig ausgebildet sein, und sie sind im letzteren Fall fest miteinander verbunden, z. B. miteinander verschraubt.

Das Handstück 33a weist eine integrierte Fokussiervorrichtung 45 auf, die durch ein am Umfang des Handstücks 33a angeordnetes verstellbar und einstellbar ist. Am Ausführungsbeispiel ist das Verstellelement 46 durch einen Drehring 47 gebildet, der in die Mantelfläche des Handstücks 33a drehbar eingebettet ist und an seiner Mantelfläche strukturiert ist, um seine Griffestigkeit zu verbessern. Durch ein Drehen des Verstellrings 47 in die eine oder die andere Drehrichtung, läßt sich die Fokussiereinrichtung 45 verstellen und einstellen.

Das Handstück 3 ist in besonderer Weise an die anatomische Form eines durchschnittlichen menschlichen Kiefers 25 angepaßt, wie er in Fig. 5 dargestellt ist, siehe Unterkieferzahnkurve 28.

Gemäß Fig. 6 ist das Handstück 33a Teil eines in seiner Gesamtheit mit 51 bezeichneten medizinischen oder vorzugsweise dentalmedizinischen Behandlungsstuhls, dem auf einer Seite oder auf beiden Seiten jeweils eine Ablagevorrichtung 52 jeweils mit einem Aufnahmeelement 53 für ein Behandlungsinstrument 31 bzw. 33a vorzugsweise verstellbar zugeordnet ist. Die Ablagevorrichtung 52 kann jeweils an einem verstellbaren Tragarm 54, 55 gehalten sein, der von einem Traggehäuse 56 absteht. Jede Ablagevorrichtung 52 können mehrere Aufnahmeelemente 53 für weitere Behandlungsinstrumente aufweisen, z.B. wenigstens ein Behandlungsinstrument 1.

Das Handstück 33a bzw. die Behandlungsinstrumente sind jeweils durch ein mit dem rückwärtigen Ende der Versorgungsleitung 35 verbundenes Steckvorrichtungsteil 57 mit einem im einzelnen nicht dargestellten Gegensteckvorrichtungsteil 58 an der Ablagevorrichtung 52 verbunden. Beide Steckvorrichtungsteile 57, 58 weisen zugehörige Medienleitungsanschlüsse für Versorgungsmedien, z.B. Wasser, Luft, Licht und elektrischer Strom auf, die im zusammengesteckten Zustand zueinanderpassen.

Der Bild- bzw. Lichtleiter 38 ist lichtleitend mit einer Bildaufnahmeeinrichtung (Kamera) verbunden, die in ein der Ablagevorrichtung 53 zugeordnetes Steuergerät oder in dem Steckverbindungsteil 57 integriert sein kann.

Im Funktionsbetrieb wird jeweils das durch den Lichteinlaß 36 aufgenommene Bild durch den Bild- bzw. Lichtleiter 38 zur Bildaufnahmeeinrichtung geleitet, dort in Signale umgewandelt und vorzugsweise auf einem Monitor 58 vom Behandlungsstuhl 51 sichtbar angezeigt. Der Monitor 58 ist verstellbar an einem Tragarm 59 gehalten, der Teil einer säulenförmigen Trageinrichtung 61 ist, die vorzugsweise am Gehäuse abgestützt ist. Zum Ein- und Ausschalten der Bildaufnahmeeinrichtung kann ein durch die Bedienungsperson betätigbares Schaltelement vorgesehen sein. Zwecks Vereinfachung der Funktion ist es vorteilhaft, am in Fig. 7 vergrößert dargestellten Aufnahmeelement 53 einen Sensor 62 anzuordnen, der das Vorhandensein und Nichtvorhandensein des Handstücks 33a feststellt und jeweils ein Signal an die zugehörige Steuereinrichtung abgibt. Bei einer solchen Ausgestaltung wird bei der Entnahme des Handstücks 33a die Bildaufnahmeeinrichtung selbsttätig eingeschaltet und bei der Rückgabe ausgeschaltet. Bei dem Sensor 62 kann es sich z.B. um eine Lichtschranke oder einen anderen Näherungsschalter handeln.

Dem Handstück 33a ist eine nicht dargestellte Schutzhülle aus lichtdurchlässigem Material, insbesondere Kunststoff-Folie, zugeordnet, in die das Handstück 33a einsteckbar ist. Das Handstück 33a wird für eine Behandlung mit der Schutzhülle benutzt. Die Schutzhülle wird nach ihrer Benutzung desinfiziert bzw. sterilisiert oder entsorgt. Hierdurch wird das Handstück 33a vor einer Kontamination geschützt.

## Patentansprüche

1. Dentalmedizinisches Handstück (3) mit einem stabförmigen Griffteil, in dessen vorderem Endbereich eine Haltevorrichtung (5) mit einer seitlichen Einstecköffnung (13) für ein Bearbeitungswerkzeug (6) angeordnet ist **dadurch gekennzeichnet,**
**dass** der vordere Griffabschnitt (3b) des Griffteils zu der der Einstecköffnung (13) abgewandten Seite (14) des Handstücks (3) hin gekrümmt ist,
**dass** der gekrümmte Griffabschnitt (3b) sich über einen Winkelbereich von etwa 10° bis 28° erstreckt und dass der Radius (r) der Krümmung des gekrümmten Griffabschnitts an der die Einstecköffnung (13) enthaltenden Seite (3d) des Handstücks (3) etwa ein 145 mm bis 175 mm beträgt, und dass die Mittelachse (5a) der Einstecköffnung (13) und der sich vom Kreuzungspunkt mit der vorgenannten Mittelachse (5a) nach hinten erstreckende Abschnitt der gekrümmten Mittelachse (3c) des gekrümmtes Griffabschnitt (3b) bzw. eine die gekrümmte Mittelachse (3c) im kreuzungspunkt berührende Tangente des vorderen Griffabschnitts (3b) einen stumpfen Winkel (W2) einschließen, und dass der stumpfe Winkel (W2) kleiner als 103 ° und größer als 95 ° ist.

2. Handstück nach Anspruch 1,
**dadurch gekennzeichnet,**
**dass** am vorderen Ende des Griffteils ein gegebenenfalls verdickter Handstückkopf (12) angeordnet ist, dessen Seitenfläche (12a) auf der Seite (15) des Handstücks (3), auf der sich die Einstecköffnung (13) befindet, im wesentlichen auf einer Verlängerung der zugehörigen gekrümmten Mantelflächenlinie (3d) des gekrümmten Griffabschnitts (3b) auf dieser Seite (15) des Handstücks (3) liegt.

3. Handstück nach einem der vorherigen Ansprüche,
**dadurch gekennzeichnet,**
**dass** der gekrümmte Griffabschnitt (3b) sich etwa über die Hälfte der Gesamtlänge des Griffteils erstreckt.

4. Handstück nach einem der vorherigen Ansprüche,
**dadurch gekennzeichnet,**
**dass** es mit einem Bearbeitungswerkzeug (6) zur Bearbeitung der Außenkontur eines Zahns (27) eingerichtet ist.

5. Handstück nach Anspruch 4,
**dadurch gekennzeichnet,**
**dass** es mit einem Bearbeitungswerkzeug (6) zur Bearbeitung der Außenkontur einer Zahnkrone eingerichtet ist.

6. Handstück nach einem der vorherigen Ansprüche,
**dadurch gekennzeichnet,**
**dass** es für eine Drehzahl der Haltevorrichtung (5) für das Bearbeitungswerkzeug (6) von wenigstens 100 000 min⁻¹ eingerichtet ist.

7. Handstück nach einem der vorherigen Ansprüche,
**dadurch gekennzeichnet,**
**dass** es ein Turbinen-Handstück ist.

8. Handstück nach einem der vorherigen Ansprüche,
**dadurch gekennzeichnet,**
**dass** ihm eine Beleuchtungseinrichtung (41) zur Beleuchtung der Behandlungsstelle zugeordnet ist.

9. Handstück nach einem der vorherigen Ansprüche,
**dadurch gekennzeichnet,**
**dass** der Griffabschnitt (3b) sich bezüglich seiner Querschnittsabmessung (3e) zum freien Ende des Handstücks (3) hin verjüngt.

10. Handstück nach Anspruch 9,
**dadurch gekennzeichnet,**
**dass** der Griffabschnitt sich bezüglich seiner Querschnittsabmessung (3e) zum freien Ende des Handstücks (3) hin kontinuierlich verjüngt.

11. Handstück nach einem der vorherigen Ansprüche,
**dadurch gekennzeichnet,**
**dass** die Mantelfläche des Griffteils in seinem vorderen Endbereich oder im vorderen oder gesamten Bereich des gekrümmten Griffabschnitts (3b) eine raue Mikrostruktur (24) aufweist.

12. Handstück nach Anspruch 11,
**dadurch gekennzeichnet,**
**dass** die Rautiefe der Mikrostruktur (24) 3 µm bis 15 µm beträgt.

13. Handstück nach Anspruch 12,
**dadurch gekennzeichnet,**
**dass** die Rautiefe der Mikrostruktur (24) 6 µm beträgt.

14. Handstück nach einem der vorherigen Ansprüche,
**dadurch gekennzeichnet,**
**dass** der gekrümmte Griffabschnitt (3b) sich über einen Winkelbereich von etwa 19 ° erstreckt.

15. Handstück nach einem der vorherigen Ansprüche,
**dadurch gekennzeichnet,**
**dass** der Radius (r) der Krümmung etwa 160 mm beträgt.

16. Handstück nach einem der vorherigen Ansprüche,
**dadurch gekennzeichnet,**
**dass** das Griffteil in seinem vorderen Bereich oder der gekrümmte Griffabschnitt (3b) in seinem vorderen oder gesamten Bereich eine Beschichtung aufweist und die Mikrostruktur (24) auf der Beschichtung angeordnet ist.

## Claims

1. Dental-medical handpiece (3) having a rod-shaped grip part in the forward end region of which there is arranged a holding device (5) having a lateral insertion opening (13) for a working tool (6),
**characterised in**
**that** the forward grip section (3b) of the grip part is curved towards the side (14) of the handpiece (3) away from the insertion opening (13),
**that** the curved grip section (3b) extends over an angle range of about 10° to 28°,
**that** the radius (r) of curvature of the curved grip section on the side (3d) of the handpiece (3) containing the insertion opening (13) is about 145 mm to 175 mm,
**that** the middle axis (5a) of the insertion opening (13) and the section of the curved middle axis (3c) of the curved grip part (3b) extending rearwardly from the point of intersection with the above-mentioned middle axis (5a), or a tangent of the forward grip section (3b) touching the curved middle axis (3c) at the point of intersection, include an obtuse angle (W2),
and **that** the obtuse angle (W2) is smaller than 103° and greater than 95°.

2. Handpiece according to claim 1,
**characterised in that**,
there is arranged on the forward end of the grip part a possibly thickened handpiece head (12) the side surfaces (12a) of which, on the side (15) of the handpiece (3) on which the insertion opening (13) is located, in substance lie on an extension of the associated curved outer surface line (3d) of the curved grip section (3b) on this side (15) of the handpiece (3).

3. Handpiece according to any preceding claim,
**characterised in that**,
the curved grip section (3b) extends over about half of the overall length of the grip part.

4. Handpiece according to any preceding claim,
**characterised in that**,
it is equipped with a working tool (6) for the working of the outer contour of a tooth (27).

5. Handpiece according to claim 4,
**characterised in that**,
it is equipped with a working tool (6) for the working of the outer contour of a tooth crown.

6. Handpiece according to any preceding claim,
**characterised in that**,
it is equipped for speeds of rotation of the holding device (5) for the working tool (6) of at least 100,000 revolutions per minute.

7. Handpiece according to any preceding claim,
**characterised in that**,
it is a turbine handpiece.

8. Handpiece according to any preceding claim,
**characterised in that**,
an illumination device (41) for illuminating the treatment site is associated therewith.

9. Handpiece according to any preceding claim,
**characterised in that**,
with regard to its cross-sectional dimension (3e), the grip section (3b) tapers towards the free end of the handpiece (3).

10. Handpiece according to claim 9,
**characterised in that**,
with regard to its cross-sectional dimension (3e), the grip section tapers continuously towards the free end of the handpiece (3).

11. Handpiece according to any preceding claim,
**characterised in that**,
the outer surface of the grip part has in its forward end region, or in the forward or total region of the curved grip part (3b), a rough microstructure (24).

12. Handpiece according to claim 11,
**characterised in that**,
the depth of roughness of the microstructure (24) is 3 µm to 15 µm.

13. Handpiece according to claim 12,
**characterised in that**,
the depth of roughness of the microstructure (24) is 6 µm.

14. Handpiece according to any preceding claim,
**characterised in that**,
the curved grip section (3b) extends over an angle range of about 19°.

15. Handpiece according to any preceding claim,
**characterised in that**,
the radius (r) of curvature is about 160 mm.

16. Handpiece according to any preceding claim,
**characterised in that**,
the grip part has, in its forward region, or the curved grip section (3b) has in its forward or overall region, a coating, and the microstructure (24) is arranged on the coating.

## Revendications

1. Pièce à main médico-dentaire (3) comportant une poignée en forme de tige, dans la région d'extrémité avant de laquelle est agencé un dispositif porte-outil (5) avec une ouverture latérale d'emboîtement (13) pour l'outil de travail (6),
**caractérisé en ce que**,
le tronçon avant (3b) de la poignée est incurvé par rapport au côté (14) de la pièce à main (3), côté détourné de l'ouverture d'emboîtement (13),
le tronçon incurvé (3b) s'étend sur une plage angulaire d'environ 10° à 28°,
**en ce que** le rayon (r) de la courbe du tronçon incurvé est d'environ 145 mm à 175 mm sur le côté (3d) de la pièce à main (3) qui contient l'ouverture d'emboîtement (13),
**en ce que** l'axe médian (5a) de l'ouverture d'emboîtement (13) et le tronçon de l'axe médian (3c) incurvé du tronçon incurvé (3b) s'étendant vers l'arrière à partir du point d'intersection avec l'axe médian (3c) précité, ou une tangente du tronçon avant (3b) en contact avec l'axe médian incurvé (3c) au point d'intersection, incluent un angle obtus (W2),
et **en ce que** l'angle obtus (W2) est inférieur à 103° et supérieur à 95°.

2. Pièce à main selon la revendication 1,
**caractérisée en ce que**,
sur l'extrémité avant de la poignée est disposée une tête de pièce à main (12) éventuellement épaissie dont la face latérale (12a) sur le côté (15) de la pièce à main (3), sur lequel se trouve l'ouverture d'emboîtement (13), se situe sensiblement sur un prolongement de la génératrice incurvée adéquate (3d) du tronçon incurvé (3b) sur ce côté (15) de la pièce à main (3).

3. Pièce à main selon l'une des revendications précédentes,
**caractérisée en ce que**,
le tronçon incurvé (3b) s'étend sensiblement sur la moitié de la longueur totale de la poignée.

4. Pièce à main selon l'une des revendications précédentes,
**caractérisée en ce que**,
celle-ci est agencée avec un outil de travail (6) pour le traitement du contour extérieur d'une dent (27).

5. Pièce à main selon la revendication 4,
**caractérisée en ce que**,
celle-ci est agencée avec un outil de travail (6) pour le traitement du contour extérieur d'une couronne dentaire.

6. Pièce à main selon l'une des revendications précédentes,
**caractérisée en ce que**,
celle-ci est prévue pour un nombre de tours du dispositif porte-outil (5) de l'outil de travail (6) d'au moins 100 000 min⁻¹.

7. Pièce à main selon l'une des revendications précédentes,
**caractérisée en ce que**,
la pièce à main est une pièce à main à turbine.

8. Pièce à main selon l'une des revendications précédentes,
**caractérisée en ce que**,
un dispositif d'éclairage est associé à celle-ci pour éclairer le site du traitement.

9. Pièce à main selon l'une des revendications précédentes,
**caractérisée en ce que**,
le tronçon (3b) va en s'amenuisant par rapport à sa dimension de section transversale (3e) vers l'extrémité libre de la pièce à main (3).

10. Pièce à main selon la revendication 9,
**caractérisée en ce que**,
le tronçon (3b) va en s'amenuisant de façon continue par rapport à sa dimension de section transversale (3e) vers l'extrémité libre de la pièce à main (3).

11. Pièce à main selon l'une quelconque des revendications précédentes,
**caractérisée en ce que**,
la face enveloppante de la poignée présente une microstructure rugueuse (24) dans sa région d'extrémité avant ou dans la région avant ou dans toute la région du tronçon incurvé (3b).

12. Pièce à main selon la revendication 11,
**caractérisée en ce que**,
la profondeur de rugosité de la microstructure (24) est de 3 µm à 15 µm.

13. Pièce à main selon la revendication 12,
**caractérisée en ce que**,
la profondeur de rugosité de la microstructure (24) est de 6 µm.

14. Pièce à main selon l'une des revendications précédentes,
**caractérisée en ce que**,
le tronçon incurvé (3b) s'étend sur une plage angulaire d'environ 19°.

15. Pièce à main selon l'une des revendications précédentes,
**caractérisée en ce que**,
le rayon (r) de courbure est d'environ 160 mm.

16. Pièce à main selon l'une des revendications précédentes,
**caractérisée en ce que**,
la poignée dans sa région avant, ou le tronçon incurvé (3b) dans sa région avant ou dans sa totalité, présente un revêtement et la microstructure (24) est agencée sur le revêtement.
